# EUROPÄISCHE PATENTSCHRIFT

(11) **EP 3 455 230 B1**
(45) Veröffentlichungstag und Bekanntmachung des Hinweises auf die Patenterteilung: **04.09.2019**
(21) Anmeldenummer: 16723327.9
(22) Anmeldetag: 11.05.2016
(51) Int. Cl.: C07F 17/00, C07B 37/02

(54) **KATIONISCHE SILICIUM(II)-VERBINDUNGEN UND VERFAHREN ZU IHRER HERSTELLUNG**
CATIONIC SILICON (II) COMPOUNDS AND METHOD FOR THE PRODUCTION THEREOF
COMPOSÉS SILICIUM(II) CATIONIQUES ET LEUR PROCÉDÉ DE PRÉPARATION

(43) Veröffentlichungstag der Anmeldung: 20.03.2019
(73) Patentinhaber: Wacker Chemie AG, 81737 München (DE)
(72) Erfinder: FRITZ-LANGHALS, Elke, 85521 Ottobrunn (DE)
(74) Vertreter: Mai, Marit
(86) Internationale Anmeldenummer: PCT/EP2016/060531
(87) Internationale Veröffentlichungsnummer: WO 2017/194100

(56) Entgegenhaltungen:
- UDO HOLTMANN ET AL: "Reaction of Decamethylsilicocene with Group 13 Element Halides: Insertions, Rearrangements, and Eliminations", ORGANOMETALLICS, Bd. 18, Nr. 26, 1. Dezember 1999 (1999-12-01), Seiten 5531-5538, XP055333954, US ISSN: 0276-7333, DOI: 10.1021/om9906114

## Beschreibung

Die Erfindung betrifft kationische Si(II)-Verbindungen und ein Verfahren zu ihrer Herstellung sowie deren Verwendung als Katalysatoren.

Kationische Silicium(II)-Verbindungen sind hochreaktive Verbindungen, die aufgrund ihrer Elektronenstruktur insbesondere für katalytische Zwecke von technischem Interesse sind. Es konnte beispielsweise in Angew. Chem. 2011, 123, 6975 gezeigt werden, dass die kationische Si (II)-Verbindung (C₅Me₅)Si⁺B(C₆F₅)₄⁻ mit hoher Selektivität die Umwandlung von Ethern katalysiert.

Dem Einsatz dieser Verbindungsklasse stand bislang insbesondere die mangelnde synthetische Zugänglichkeit im Wege. Die Herstellung der Verbindung (C₅Me₅)Si⁺B(C₆F₅)₄⁻ aus Silicocen, (C₅Me₅)₂Si, kann - wie in Chem. Eur. Joc. 2014, 20, 9192 beschrieben - beispielsweise ausschließlich durch Umsetzung von Silicocen mit der speziellen Protonensäure (C₅H₂Me₅)⁺ B(C₆F₅)₄⁻ erfolgen, welche nur in einer sehr aufwändigen, teilweise sicherheitskritischen 7-stufigen Tieftemperatursynthese gemäß Organometallics 2000, 19, 1442 in Verbindung mit Science, 2004, 305, 849 zugänglich ist. Einfacher zugängliche Protonensäuren führen stets, wie in J. Organomet. Chem. 1993, 446, 139 ausgeführt, zur oxidativen Addition unter Bildung eines Addukts mit vierwertigem Silicium.

Holtmann et al. (Organometallics 1999, 18, 5531-5538) offenbart die Reaktionen von Decamethylsilicocen mit Trihalogeniden von Bor, Aluminium und Gallium, sowie mit organo-substituierten Derivaten dieser Elemente (Schemata 1-4, 6-8). Es werden jedoch keine Übertragungen von Hydridionen beobachtet.

Es bestand daher ein Bedarf an einem einfacheren Verfahren, mit welchem kationische Silicium(II)-Verbindungen zugänglich gemacht werden können.

Gegenstand der Erfindung ist ein Verfahren zur Herstellung kationischer Silicium(II)-Verbindungen der allgemeinen Formel **I**

**(R^{a}Si)⁺HA⁻** (I)

durch Umsetzung der Silicium(II)-Verbindungen der allgemeinen Formel **II**

**(R^{b}-H) (R^{a}Si)⁺** (II)

mit einer Verbindung **A,**
wobei
- **R^{a}**: einen mit dem kationischen Siliciumatom über kovalente Bindung, ionische Bindung oder über eine oder mehrere π-Bindungen an das kationische Siliciumatom gebundenen Kohlenstoff-haltigen Rest, der zusätzlich Heteroatome wie Stickstoff, Sauerstoff oder Schwefel enthalten kann,
- **(R^{b}-H)**: einen π-gebundenen einfach negativ geladenen Rest der allgemeinen Formel **III,** 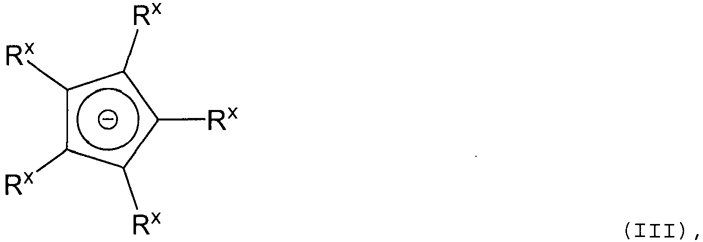
- **R^{x}**: einwertige oder mehrwertige organische Reste, die zur Bildung anellierter Ringe auch miteinander verbunden sein können, mit der Maßgabe, dass mindestens einer der Reste **R^{x}** einen über Kohlenstoff gebundenen organischen Rest, welcher mindestens ein Wasserstoffatom trägt, das bevorzugt in alpha Stellung zum Ring steht, und
- **A**: eine Verbindung, die als elektrophil zur Anlagerung von Elektronenpaaren befähigt ist, die ausgewählt ist aus Verbindungen der Formel **MX₃** mit M = B, Al und Ga, wobei **X** einen C6-C20-Arylrest bedeutet, der mit Halogen substituiert ist, bedeuten.

Es wurde überraschend gefunden, dass kationische Silicium(II)-Verbindungen durch Übertragung eines negativ geladenen Wasserstoffatoms, eines Hydridions, auf einen Hydridakzeptor hergestellt werden können. Hydridakzeptoren sind synthetisch sehr gut zugänglich. Daher wird die Zugänglichkeit der kationischen Silicium(II)-Verbindungen auf diese Weise wesentlich vereinfacht. Ein weiterer Vorteil ist, dass die Umsetzung bei Umgebungstemperatur mit hoher Ausbeute ohne die Bildung von Nebenprodukten erfolgt.

Exemplarisch wird die bei dem Verfahren ablaufende Reaktion erläutert unter Einsatz eines bevorzugten Cyclopentadienylrests **(R^{b}-H)** der allgemeinen Formel **III,** nämlich **(Cp-CHR¹R²)⁻**.
Bei dem Verfahren wird ein Hydridion auf den Hydridakzeptor **A** übertragen unter Bildung von **HA⁻** und der Verbindung **Cp=CR¹R²** (entspricht **R^{b}**) gemäß der Reaktionsgleichung 1,

**(Cp-CHR¹R²)⁻ (R^{a}Si)⁺ + A => Cp=CR¹R² + (R^{a}Si)⁺ + HA⁻** (1),

wobei **Cp** einen Cyclopentadienylrest bedeutet.

Die bei der Umsetzung ebenfalls gebildete Verbindung **HA⁻** bildet das Gegenion zu der kationischen Silicium(II)-Verbindung **(R^{a}Si)⁺**.

Bevorzugt ist der Rest **R^{a}** π-gebunden und enthält mindestens zwei konjugierte Kohlenstoff-Kohlenstoff-Doppelbindungen.
Ganz besonders bevorzugt ist **R^{a}** ein mit den Resten **R^{y}** substituierter π-gebundener Cyclopentadienylrest (**R^{y}₅Cp**), wobei
- **R^{y}**: einwertige oder mehrwertige organische Reste bedeutet, die zur Bildung anellierter Ringe auch miteinander verbunden sein können.

In diesem Fall hat die Verbindung der allgemeinen Formel **I** die Struktur der allgemeinen Formel **Ia:**

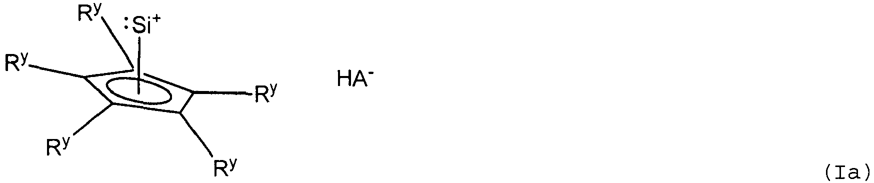

Die Reste **R^{a}** und **R^{b}** können auch miteinander verbunden sein, bevorzugt über einen oder mehrere Kohlenstoffreste.

Die Reste **R^{y}** bedeuten bevorzugt unabhängig voneinander Wasserstoff, lineare oder verzweigte, acyclische oder cyclische, gesättigte oder ein- oder mehrfach ungesättigte C1-C20 Alkyl- oder C6-C20 Aryl-, besonders bevorzugt C1-C3 Alkyl-, ganz besonders bevorzugt Methylreste.
Beispiele für Reste **R^{y}** sind Alkylreste, wie der Methyl-, Ethyl- , n-Propyl-, iso-Propyl-, n-Butyl-, sec-Butyl-, iso-Butyl-, tert-Butyl-, n-Pentyl-, sec-Pentyl, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Der Rest **(R^{b}-H)** ist ein mit den Resten **R^{x}** substituiertes Cyclopentadienyl-Anion, welches aus einem einfach negativ geladenen, aromatischen Fünfringsystem **C₅R^{x}₅⁻** besteht.

Die Reste **R^{x}** in der Verbindung der allgemeinen Formel **III** bedeuten bevorzugt unabhängig voneinander Wasserstoff, lineare oder verzweigte, acyclische oder cyclische, gesättigte oder ein- oder mehrfach ungesättigte C1-C20 Alkyl- oder C6-C20 Aryl- , besonders bevorzugt C1-C3 Alkyl-, ganz besonders bevorzugt Methylreste.
Bevorzugt bedeutet mindestens einer der Reste **R^{x}** eine Gruppe-**CHR¹R²,** wobei die Reste **R¹** und **R²** unabhängig voneinander die Bedeutung Wasserstoff, lineare oder verzweigte, acyclische oder cyclische, gesättigte oder ein- oder mehrfach ungesättigte C1-C20 Alkyl- oder C6-C20 Aryl-, besonders bevorzugt C1-C3 Alkyl-, ganz besonders bevorzugt Methylreste bedeuten.
Beispiele für Reste **R^{x}** sind Alkylreste wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthryl- und Phenanthrylrest; Alkarylreste, wie der o-, m- und p-Tolyl-, Xylyl-, Mesitylenyl- und o-, m- und p-Ethylphenylrest; und Aralkylreste, wie der Benzylrest, der α- und der β-Phenylethylrest.

Verbindungen **A** sind Hydridakzeptoren. Verbindungen **A** sind ausgewählt aus Verbindungen der Formel **MX₃** mit **M** = B, Al und Ga wobei **X** einen C6-C20 Aryl-reste bedeutet, der mit Halogen, bevorzugt Fluor substituiert ist, oder Fluor, Chlor und Brom.

Bevorzugte Beispiele für Verbindungen **A** sind: B(C₆F₅)₃, B(C₆Cl₅)₃, B(2,6-Difluor-C₆H₃)₃, B(2,4,6-Trifluor-C₆H₂)₃, B(2-C₆F₅-C₆F₄)₃, B(2,3,5,6-Tetrafluor-C₆H)₃, B(4,5,6,7-Tetrafluor-2-naphthyl)₃, Al(C₆F₅)₃,Ga(C₆F₅)₃.

Die bei der Umsetzung gemäß der Reaktionsgleichung 1 gebildete Verbindung **HA⁻** bildet das Gegenion zu der kationischen Silicium(II)-Verbindung (**R^{a}Si**)⁺.
Es ist jedoch auch möglich, das Anion **HA**⁻ durch weitere Anionen auszutauschen, beispielsweise durch eine Umsalzungsreaktion, welche beispielsweise der erfindungsgemäßen Umsetzung nachgeschaltet wird.

Bei der Umsetzung entsteht außerdem das Abspaltprodukt **R^{b}**, welches gemäß der exemplarischen Reaktionsgleichung 1 die Bedeutung **Cp=CR¹R²** aufweist. Abspaltprodukte **R^{b}** können in der Reaktionsmischung belassen werden oder aber abgetrennt werden, wenn dies vorteilhaft ist, beispielweise dann, wenn **R^{b}** bei katalytischen Prozessen stört.
Die Abtrennung kann in einer der Fachkraft bekannten Weise erfolgen, beispielsweise destillativ oder durch fraktionierte Kristallisation. Bevorzugt wird beim destillativen Verfahren die Verbindung **R^{b}** abdestilliert, bevorzugt unter vermindertem Druck. Erfolgt die Abtrennung durch Kristallisation, so wird bevorzugt die Verbindung der allgemeinen Formel I durch Zugabe eines Fällungsmittels auskristallisiert, die Verbindung der allgemeinen Formel **R^{b}** verbleibt in Lösung und kann beispielsweise abfiltriert werden.

Das molare Verhältnis der Verbindung der allgemeinen Formel **II** und dem Hydridakzeptor **A** beträgt bevorzugt mindestens 1:10 und höchstens 10:1, besonders bevorzugt mindestens 1:5 und höchstens 5:1, ganz besonders bevorzugt mindestens 1:3 und höchstens 3:1. Die beiden Komponenten können dabei in beliebiger Reihenfolge vermischt werden, wobei das Vermischen in einer der Fachkraft bekannten Weise erfolgt.

Die erfindungsgemäße Umsetzung kann in Gegenwart einer oder mehrerer weiterer Komponenten durchgeführt werden, beispielsweise in Gegenwart eines Lösemittels oder eines Gemischs aus mehreren Lösemitteln.
Es kann entweder die Verbindung der allgemeinen Formel **II** oder die Verbindung **A** oder es können beide Komponenten in einem Lösemittel oder in einem Lösemittelgemisch gelöst werden. Der Anteil des Lösemittels oder des Lösemittelgemisches beträgt bezogen auf die Summe der Verbindungen der allgemeinen Formel **II** und **A** bevorzugt mindestens 0,1 Gew.% und höchstens die 1000-fache Gewichtsmenge, besonders bevorzugt mindestens 10 Gew. % und höchstens die 100-fache Gewichtsmenge, ganz besonders bevorzugt mindestens 30 Gew. % und höchstens die 10-fache Gewichtsmenge.

Als Lösemittel können beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert-butylether, Anisol, Tetrahydrofuran oder Dioxan, oder Nitrile wie z.B. Acetonitril oder Propionitril, eingesetzt werden.

Die erfindungsgemäße Umsetzung zu der Verbindung mit der allgemeinen Formel **I** kann außerdem in Gegenwart von Komponenten erfolgen, die in Gegenwart der Verbindung der allgemeinen Formel I reagieren. Die als Katalysator für die Umsetzung der weiteren Komponenten wirkende Verbindung der allgemeinen Formel **I** wird in diesem Fall in Gegenwart der Reaktanden erzeugt.

Die Umsetzung kann unter Umgebungsdruck oder unter vermindertem oder unter erhöhtem Druck durchgeführt werden.
Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt.
Die erfindungsgemäße Umsetzung erfolgt bevorzugt bei Temperaturen zwischen mindestens - 100°C und höchstens + 250°C, besonders bevorzugt zwischen mindestens - 20°C und höchstens + 150°C, ganz besonders bevorzugt zwischen mindestens 0°C und höchstens + 100°C.

Ein weiterer Gegenstand der Erfindung sind die kationischen Si(II)-Verbindungen der allgemeinen Formel **I**

**(R^{a}Si)⁺HA⁻** (I).

Beispiele für Verbindungen der allgemeinen Formel **I** sind: (C₅Me₅)Si⁺HB(C₆ F₅)₃⁻, HB(C₆Cl₅)₃⁻, (C₅Me₅)Si⁺HB(2,6-difluor-C₆H₃)₃⁻, (C₅Me₅)Si⁺HB(2,4,6-trifluor-C₆H₂)₃⁻, (C₅Me₅)Si⁺HB(2-C₆F₅-C₆F₄)₃⁻, (C₅Me₅)Si⁺HB(2,3,5,6-tetrafluor-C₆H)₃⁻, (C₅Me₅)Si⁺HB(4,5,6,7-tetrafluor-2-naphthyl)₃⁻, (C₅Me5)Si⁺HB[C₆H₂(CF₃)₃]₃⁻, (C₅Me₅)Si⁺HAl(C₆F₅)₃⁻, (C₅Me₅)Si⁺HGa(C₆F₅)₃⁻, (C₅*i*Pr₅)Si⁺HB(C₆F₅)₃⁻ und (C₅H₂Me₃)Si⁺HB(C₆F₅)₃⁻.

Die kationische Silicium(II)-Verbindung der allgemeinen Formel **I** kann als Katalysator eingesetzt werden, beispielsweise für Umwandlungsreaktionen von Ethern, kationische Polymerisationen und Hydrosilylierungen. Wie am Beispiel der Hydrosilylierung gezeigt werden konnte, verlaufen Prozesse, die mit Silicium(II)-Verbindungen der allgemeinen Formel **I** katalysiert werden, besonders einheitlich und ohne nennenswerte Bildung von Nebenprodukten.

Alle vorstehenden Symbole der vorstehenden Formeln weisen ihre Bedeutungen jeweils unabhängig voneinander auf. In allen Formeln ist das Siliciumatom vierwertig.

Es sind, falls jeweils nicht anders angegeben, alle Mengen- und Prozentangaben auf das Gewicht bezogen, und alle Temperaturen 20°C.

### Beispiele

Die Umsetzung von Silicocen, (C₅Me₅)₂Si mit dem Hydridakzeptor B(C₆F₅)₃ liefert bei 20°C in quantitativer Ausbeute die kationische Silicium(II)-Verbindung (C₅Me₅)Si⁺ HB(C₆F₅)₃⁻ und Tetramethylfulven (C₅Me₄)=CH₂.

### Beispiel 1

Alle Arbeitsschritte werden unter Ar ausgeführt. 20,1 mg (0,067 mmol) Decamethylsilicocen [(C₅Me₅)₂Si, Formel II mit **R^{a}** = C₅Me₅ und **(R^{b}-H)** = C₅Me₅⁻], und 30,0 mg (0,059 mmol). Tris(pentafluorphenyl)bor werden jeweils in 0,5 ml CD₂Cl₂ gelöst und die Lösungen in einem NMR-Rohr vereinigt. Es entsteht sofort eine dunkelgelbe Färbung, die auf die Bildung von Tetramethylfulven hinweist. Die Lösung enthält die Verbindung (Me₅C₅)Si⁺BH(C₆F₅)₃⁻.

Die Signale dieser Verbindung bleiben bei 20°C über einen Zeitraum von 35 Tagen unverändert, d.h. es findet keine Umwandlung Zersetzung statt.
¹H-NMR (CD₂Cl₂) : δ = 1,83 und 1,88 (2s, 4 Me von Tetramethylfulven), 2,19 [s, (C₅Me₅)Si⁺], 3,57 [q, breit, J(HB) = 17 Hz, H-B(C₆F₅)₃⁻], 5,40 (s, 2H, H₂C= von Tetramethylfulven);
¹⁹F-NMR (CD₂Cl₂) : δ = -133,6 (m, 2F) ; -164, 1 (m, 1F) ; -167,2 (m, 2F) ;
²⁹Si-NMR (CD₂Cl₂) : δ = -399,1.

### Beispiel 2

Alle Arbeitsschritte werden unter Ar ausgeführt. 11,8 mg (0,046 mmol) Decamethylsilicocen [(C₅Me₅)₂Si] und 23,3 g (0,046 mmol) Tris(pentafluorphenyl)bor werden nacheinander in ein NMR-Rohr eingewogen und mit 1 ml CDCl₃ versetzt. Die beiden Komponenten lösen sich auf und es entsteht sofort eine dunkelgelbe Färbung, die auf die Bildung von Tetramethylfulven hinweist. Die Lösung enthält die Verbindung (Me₅C₅)Si⁺ BH(C₆F₅)₃⁻.
¹H-NMR (CDCl₃) : δ = 1,76 und 1,82 (2s, 4 Me von Tetramethylfulven), 2,10 [s, (C₅Me₅)Si⁺], 3,48 [q, breit, H-B(C₆F₅)₃⁺], 5, 40 (s, 2H, H₂C=);
²⁹Si-NMR (CDCl₃) : δ = -399,9.

### Beispiel 3

Alle Arbeitsschritte werden unter Ar ausgeführt. 100 mg (0,335 mmol) Decamethylsilicocen und 172 mg (0,335 mmol) Tris(pentafluorphenyl)bor werden jeweils in 0,5 ml CD₂Cl₂ gelöst und die beiden Lösungen vereinigt. Die Lösung färbt sich sofort dunkelgelb, Ursache ist die Bildung von Tetramethylfulven. Man versetzt mit Heptan, wobei sich ein farbloser kristalliner Niederschlag der Verbindung (Me₅C₅)Si⁺ BH(C₆F₅)₃⁻ bildet. Die Suspension wird im Vakuum zur Entfernung von CD₂Cl₂ etwas eingeengt und nochmals mit 1 ml Heptan versetzt. Man entfernt die Lösung mit einer Spritze und wäscht den kristallinen Rückstand noch zweimal mit je 1 ml Heptan. Man trocknet ihn im Hochvakuum bei 20°C und erhält 155 mg (64 %) des reinen, Fulven-freien Produkts (Me₅C₅)Si⁺ BH(C₆F₅)₃⁻.

### Beispiel 4: Hydrosilylierungsreaktion

Alle Arbeitsschritte werden unter Ar ausgeführt. 118,5 mg (1,00 mmol) α-Methylstyrol und 136,7 mg (1,00 mmol) Dimethylphenylsilan werden in 0,5 ml CD₂Cl₂ gelöst und bei 20°C mit einer Lösung von 2,8 mg (0,0041 mmol) der Verbindung (Me₅C₅)Si⁺ BH(C₆F₅)₃⁻(Herstellung erfolgt wie in Beispiel 3) in 0,5 ml CD₂Cl₂ versetzt. Die spontan eintretende Hydrosilylierungsreaktion unter Bildung des Produkts PhSiMe₂-CH₂-CH(CH₃)Ph wird ¹H-NMR-spektros-kopisch verfolgt. Nach 20 min. haben sich ca. 50 % Produkt gebildet, die Umsetzung ist nach 24 Std. vollständig.

### Beispiel 5: Hydrosilylierungsreaktion

Alle Arbeitsschritte werden unter Ar ausgeführt. Die nach Beispiel 1 hergestellte NMR-Probe, welche die Verbindung (Me₅C₅)Si⁺ BH(C₆F₅)₃⁻ und Tetramethylfulven enthält, wird mit 9,1 mg (0,067 mmol) Dimethylphenylsilan versetzt. Die anfangs noch dunkelgelbe Lösung entfärbt sich innerhalb weniger Stunden. Das gelb gefärbte Tetramethylfulven reagiert vollständig mit Dimethylphenylsilan unter Bildung des Hydrosilylierungsprodukts PhSiMe₂-CH₂-C₅Me₄ (NMR-spektroskopische Untersuchung) . Die Verbindung (Me₅C₅)Si⁺ BH(C₆F₅)₃⁻ wird in unveränderter Menge ¹H-NMR-spektroskopisch nachgewiesen (Singulett bei δ = 2,2 ppm).

### Beispiel 6: Hydrosilylierungsreaktion

Alle Arbeitsschritte werden unter Ar ausgeführt. Eine nach Beispiel 1 hergestellte Lösung in CD₂Cl₂ enthaltend jeweils 0,033 mmol der Verbindung (Me₅C₅)Si⁺ BH(C₆F₅)₃⁻ und Tetramethylfulven wird mit einer Mischung aus 17,4 mg (0,147 mmol) α-Methylstyrol und 14,3 mg (0,105 mmol) Dimethylphenylsilan versetzt. Es bilden sich die Produkte der Hydrosilylierungsreaktionen von Dimethylphenylsilan mit α-Methylstyrol [PhSiMe₂-CH₂-CH(CH₃)Ph] und mit Tetramethylfulven (PhSiMe₂-CH₂-C₅Me₄).

## Patentansprüche

1. Verfahren zur Herstellung kationischer Silicium(II)-Verbindungen der allgemeinen Formel **I**
**(R^{a}Si)⁺HA⁻** (I)
durch Umsetzung der Silicium(II)-Verbindungen der allgemeinen Formel **II**
**(R^{b}-H)(R^{a}Si)⁺** (II)
mit einer Verbindung **A,**
wobei
**R^{a}** einen mit dem kationischen Siliciumatom über kovalente Bindung, ionische Bindung oder über eine oder mehrere π-Bindungen an das kationische Siliciumatom gebundenen Kohlenstoff-haltigen Rest, der zusätzlich Heteroatome enthalten kann,
**(R^{b}-H)** einen π-gebundenen einfach negativ geladenen Rest der allgemeinen Formel **III,** 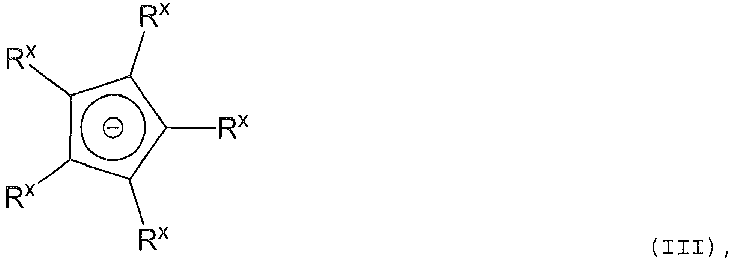
**R^{x}** einwertige oder mehrwertige organische Reste, die zur Bildung anellierter Ringe auch miteinander verbunden sein können, mit der Maßgabe, dass mindestens einer der Reste **R^{x}** einen über Kohlenstoff gebundenen organischen Rest, welcher mindestens ein Wasserstoffatom trägt und
**A** eine Verbindung, die als elektrophil zur Anlagerung von Elektronenpaaren befähigt ist, die ausgewählt wird aus Verbindungen der Formel **MX₃** mit **M** = B, Al und Ga, wobei **X** einen C6-C20 Arylrest bedeutet, der mit Halogen substituiert ist, bedeuten.

2. Kationische Silicium(II)-Verbindungen der allgemeinen Formel **I**
**(R^{a}Si)⁺HA⁻** (I)
wobei
**R^{a}** einen mit dem kationischen Siliciumatom über kovalente Bindung, ionische Bindung oder über eine oder mehrere π-Bindungen an das kationische Siliciumatom gebundenen Kohlen-stoff-haltigen Rest bedeutet, der zusätzlich Heteroatome enthalten kann und
**A** eine Verbindung, die als elektrophil zur Anlagerung von Elektronenpaaren befähigt ist, die ausgewählt wird aus Verbindungen der Formel **MX₃** mit **M** = B, Al und Ga, wobei **X** einen C6-C20 Arylrest bedeutet, der mit Halogen substituiert ist, bedeuten.

3. Verfahren nach Anspruch 1, wobei die Reste **R^{x}** unabhängig voneinander Wasserstoff, lineare oder verzweigte, acyclische oder cyclische, gesättigte oder ein- oder mehrfach ungesättigte C1-C20 Alkyl- oder C6-C20 Arylreste bedeuten.

4. Verfahren nach Anspruch 1 oder 3, wobei **R^{a}** ein mit den Resten **R^{y}** substituierter π-gebundener Cyclopentadienylrest **(R^{y}₅Cp)** ist, wobei
**R^{y}** einwertige oder mehrwertige organische Reste bedeuten, die zur Bildung anellierter Ringe auch miteinander verbunden sein können.

5. Verfahren nach Anspruch 1, 3 oder 4, welches in aprotischem Lösemittel durchgeführt wird, das ausgewählt wird aus Kohlenwasserstoffen, Chlorkohlenwasserstoffen Ethern, Nitrilen, Organosilanen, oder Organosiloxanen.

6. Verwendung der kationischen Silicium(II)-Verbindungen der allgemeinen Formel I gemäß Anspruch 2 als Katalysatoren.

## Claims

1. Method for producing cationic silicon(II) compounds of general formula **I**
**(R^{a}Si)⁺HA⁻** (I)
by reacting the silicon(II) compounds of general formula **II**
**(R^{b}-H)(R^{a}Si)⁺** (II)
with a compound **A,**
where
**R^{a}** is a carbon-containing radical, which may additionally comprise heteroatoms, bound to the cationic silicon atom via a covalent bond, ionic bond or via one or more π- bonds with the cationic silicon atom,
**(R^{b}-H)** is a π-bonded singly negatively charged radical of general formula **III,** 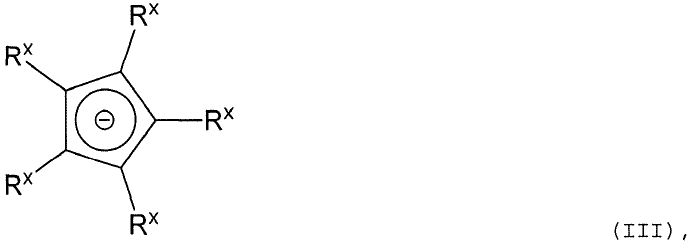
**R^{x}** are monovalent or polyvalent organic radicals, which may also be bonded to one another to form a fused ring, with the proviso that at least one of the radicals **R^{x}** an organic radical bonded via carbon bearing at least one hydrogen atom, and
**A** is a compound which, as an electrophile, is capable of accepting electron pairs and which is selected from compounds of formula **MX₃** where **M** = B, Al and Ga, wherein **X** is a C6-C20 aryl radical which is substituted by halogen.

2. Cationic silicon(II) compounds of general formula **I**
**(R^{a}Si)⁺HA⁻** (I)
where
**R^{a}** is a carbon-containing radical, which may additionally comprise heteroatoms, bound to the cationic silicon atom via a covalent bond, ionic bond or via one or more π-bonds with the cationic silicon atom and
**A** is a compound which, as an electrophile, is capable of accepting electron pairs and which is selected from compounds of formula **MX₃** where **M** = B, Al and Ga, wherein **X** is a C6-C20 aryl radical which is substituted by halogen.

3. Method according to Claim 1, wherein the radicals **R^{x}** are each independently hydrogen, linear or branched, acyclic or cyclic, saturated or mono- or polyunsaturated C1-C20 alkyl or C6-C20 aryl radicals.

4. Method according to Claim 1 or 3, wherein **R^{a}** is a π-bonded cyclopentadienyl radical substituted by the radicals **R^{y} (R^{y}₅Cp)** wherein
**R^{y}** are monovalent or polyvalent organic radicals, which may be bonded to one another to also form fused rings.

5. Method according to Claim 1, 3 or 4, which is carried out in aprotic solvent selected from hydrocarbons, chlorohydrocarbons, ethers, nitriles, organosilanes or organosiloxanes.

6. Use of the cationic silicon(II) compounds of general formula I according to Claim 2 as catalysts.

## Revendications

1. Procédé de fabrication de composés de silicium (II) cationiques de la formule générale **I** :
**(R^{a}Si)⁺HA⁻** (I)
par mise en réaction des composés de silicium (II) de la formule générale **II** :
**(R^{b-}H)(R^{a}Si)⁺** (II)
avec un composé **A,**
dans lesquelles
**R^{a}** signifie un radical carboné relié avec l'atome de silicium cationique par une liaison covalente, une liaison ionique ou par une ou plusieurs liaisons π sur l'atome de silicium cationique, qui peut en outre contenir des hétéroatomes,
**(R^{b}-H)** signifie un radical chargé négativement une fois à liaison π de la formule générale **III** : 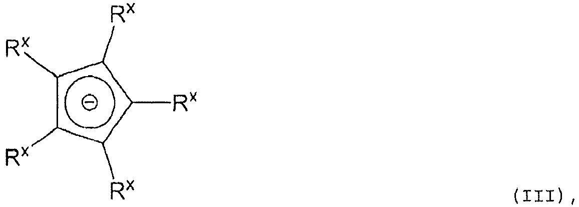
les **R^{x}** signifient des radicaux organiques monovalents ou polyvalents, qui peuvent également être reliés les uns avec les autres pour former des cycles annelés, à condition qu'au moins un des radicaux **R^{x}** un radical organique relié par un carbone, qui porte au moins un atome d'hydrogène, et
**A** signifie un composé qui est apte à l'addition de paires d'électrons en tant qu'électrophile, qui est choisi parmi les composés de la formule **MX₃** avec **M** = B, Al et Ga, **X** signifiant un radical aryle en C6-C20, qui est substitué avec halogène.

2. Composés de silicium (II) cationiques de la formule générale **I** :
**(R^{a}Si)⁺HA⁻** (I)
dans laquelle
**R^{a}** signifie un radical carboné relié avec l'atome de silicium cationique par une liaison covalente, une liaison ionique ou par une ou plusieurs liaisons π sur l'atome de silicium cationique, qui peut en outre contenir des hétéroatomes, et
**A** signifie un composé qui est apte à l'addition de paires d'électrons en tant qu'électrophile, qui est choisi parmi les composés de la formule **MX₃** avec **M** = B, Al et Ga, **X** signifiant un radical aryle en C6-C20, qui est substitué avec halogène.

3. Procédé selon la revendication 1, dans lequel les radicaux **R^{x}** signifient indépendamment les uns des autres l'hydrogène, des radicaux alkyle en C1-C20 ou aryle en C6-C20 linéaires ou ramifiés, acycliques ou cycliques, saturés ou mono- ou polyinsaturés.

4. Procédé selon la revendication 1 ou 3, dans lequel **R^{a}** est un radical cyclopentadiényle **(R^{y}₅Cp)** à liaison π substitué avec les radicaux **R^{y}**,
les **R^{y}** signifiant des radicaux organiques monovalents ou polyvalents, qui peuvent également être reliés les uns avec les autres pour former des cycles annelés.

5. Procédé selon la revendication 1, 3 ou 4, qui est réalisé dans un solvant aprotique, qui est choisi parmi les hydrocarbures, les hydrocarbures chlorés, les éthers, les nitriles, les organosilanes ou les organosiloxanes.

6. Utilisation des composés de silicium (II) cationiques de la formule générale I selon la revendication 2 en tant que catalyseurs.
